# DEMANDE DE BREVET EUROPEEN

(11) **EP 1 375 961 A2**
(43) Date de publication de la demande: **02.01.2004**
(21) Numéro de dépôt: 03291515.9
(22) Date de dépôt: 20.06.2003
(51) Int. Cl.: F16H 3/00

(54) **Transmission automatique a six vitesses pour véhicule automobile**

(30) Priorité: 21.06.2002 FR 0207724; 21.06.2002 FR 0207725
(71) Demandeur: Renault s.a.s., 92100 Boulogne Billancourt (FR)
(72) Inventeur: Raoul, Michel, 78990 Elancourt (FR)

(57) **Abrégé**

Transmission automatique (10) à six vitesses caractérisée en ce qu'elle comporte trois trains d'engrenages entre d'une part un arbre d'entrée (20) constituant un premier chemin de puissance et supportant un train planétaire double (50) et un pignon de sortie (60) coaxial, et d'autre part d'un arbre intermédiaire (30) parallèle à l'arbre d'entrée constituant un deuxième chemin de puissance.

## Description

La présente invention se rapporte au domaine des transmissions automatiques, notamment pour véhicules automobiles, constituées de trains planétaires contrôlés par des éléments de friction tels que des embrayages et des freins.

On connaît des transmissions complexes à cinq et six rapports de marche avant, faisant appel à un train planétaire double, à un train planétaire simple et à de nombreux éléments de couplage et de freinage. Ceci aboutit à des organes encombrants, lourds, coûteux et difficiles à implanter sur les véhicules dont le moteur est disposé transversalement.

Une amélioration significative a été apportée par le concept dit "Lepelletier" décrit dans la publication FR2 656 055. Selon cet état de la technique, on place en entrée de la boîte de vitesses deux chemins de puissance constitués de deux trains d'engrenage composés de pignons fixes toujours en prise et de rapports différents, afin d'entrer par l'intermédiaire d'embrayages, et avec des vitesses de rotation supérieures ou inférieures à celle du moteur sur un des éléments d'un train planétaire double ou d'un train Ravigneaux.

Avec seulement cinq éléments de friction associés à l'un des deux types de train planétaire, on obtient ainsi six rapports de marche avant convenablement étagés et un rapport de marche arrière. En variante, il est proposé de placer en entrée de boîte, pour réaliser les deux chemins de puissance, un train planétaire simple, solution que l'on retrouve dans d'autres publications.

La conception "Lepelletier", du niveau de complexité d'une boîte de vitesses à quatre rapports, présente l'inconvénient d'être en vitesse surmultipliée dès le rapport de quatrième, et donc très surmultipliée sur le rapport de sixième. Sur ce dernier rapport, et à vitesse véhicule élevée, la couronne du premier train planétaire d'un train planétaire double atteint un régime absolu de rotation très élevé, et l'embrayage qui lui est associé a un régime de rotation différentiel également très élevé, ce qui rend la réalisation et la mise au point extrêmement délicates. Par ailleurs, cette conception qui consiste à rajouter des rapports en vitesse surmultipliée est synonyme de déperdition de puissance, de mauvais rendement. De plus, elle ne procure pas de rapport de première court, et ne permet pas d'obtenir, comme c'est généralement le cas dans les boîtes automatiques à train planétaire, des rapports de première et de marche arrière très peu différents.

La présente invention a pour objet une transmission automatique à six vitesses, remédiant aux inconvénients l'état de la technique connue de la publication FR 2 656 055, tout en étant aussi compacte, économique et plus simple dans la disposition de ses éléments de friction, de façon à obtenir des étagements remarquables très adaptables à partir du même train planétaire double.

Dans ce but elle comporte trois trains d'engrenages entre d'une part un arbre d'entrée constituant un premier chemin de puissance et supportant un train planétaire double et un pignon de sortie, et d'autre part d'un arbre intermédiaire parallèle à l'arbre d'entrée constituant un deuxième chemin de puissance.

Selon, un autre mode de réalisation, cette transmission comporte trois trains d'engrenages entre d'une part un arbre d'entrée et un second arbre dans l'alignement de l'arbre d'entrée, constituant un premier chemin de puissance supportant un train Ravigneaux et un pignon de sortie, et d'autre part un arbre intermédiaire parallèle à l'arbre d'entrée constituant un deuxième chemin de puissance.

De préférence, le premier train d'engrenages, composé de deux pignons fixes et portés respectivement par l'arbre d'entrée et par l'arbre intermédiaire, a un rapport de transmission proche de un.

Le deuxième train d'engrenages peut être composé d'une part d'un pignon fou porté par l'arbre intermédiaire, pouvant être couplé avec ce dernier par un premier embrayage ou immobilisé par rapport au carter par un premier frein, et d'autre part d'un pignon fixe par rapport aux deux planétaires et d'un train planétaire double, coaxial à l'arbre d'entrée.

Dans ce cas, le troisième train d'engrenages peut avantageusement être composé d'une part d'un pignon fou porté par l'arbre intermédiaire pouvant être couplé avec ce dernier par un second embrayage, et d'autre part d'un pignon fixe par rapport à la couronne du premier train planétaire simple du double train planétaire coaxial à l'arbre d'entrée.

En variante, le deuxième train d'engrenages peut aussi être composé d'un pignon fou porté par l'arbre intermédiaire, pouvant être couplé avec ce dernier par un premier embrayage et un pignon fixe par rapport à un planétaire, et son rapport de transmission R2 est tel que le produit R2×R0 soit un rapport de réduction.

Dans ce cas, le troisième train d'engrenages est par exemple composé d'un pignon fou porté par l'arbre intermédiaire, pouvant être couplé avec ce dernier par un second embrayage ou immobilisé par rapport au carter par un premier frein et un pignon fixe par rapport à un planétaire, et dont le rapport de transmission R1 est tel que le produit R1×R0 soit un rapport de réduction.

Les deuxième et troisième trains d'engrenages, indépendants l'un de l'autre, ont tous deux des rapports inférieurs à un, assurant une réduction de vitesse de rotation par rapport à celle du moteur sans inversion de sens de rotation.

De préférence, les six rapports de marche avant, le rapport de marche arrière et le point mort freiné sont obtenus en agissant sur les embrayages et sur les freins intervenant sur les éléments d'un train planétaire double dont les deux planétaires sont liés et dont le porte-satellites du premier train lié à la couronne du second train constitue la sortie de puissance vers le différentiel et les roues.

D'autres caractéristiques et avantages de l'invention ressortiront clairement de la description suivante de la description d'un mode de réalisation non limitatif de celle-ci, en liaison avec les dessins annexés sur lesquels :
- la figure 1 représente schématiquement une première forme de réalisation de la chaîne cinématique, du volant moteur au différentiel, avec un train planétaire double,
- la figure 2 représente la table de sélection des éléments de commutation, et
- la figure 3 représente un exemple de diagramme des vitesses correspondant à un train planétaire double.
- la figure 4 représente schématiquement une deuxième forme de réalisation de la chaîne cinématique du volant moteur au différentiel avec un train Ravigneaux,
- la figure 5 représente la table de sélection des éléments de commutation de la figure 4, et

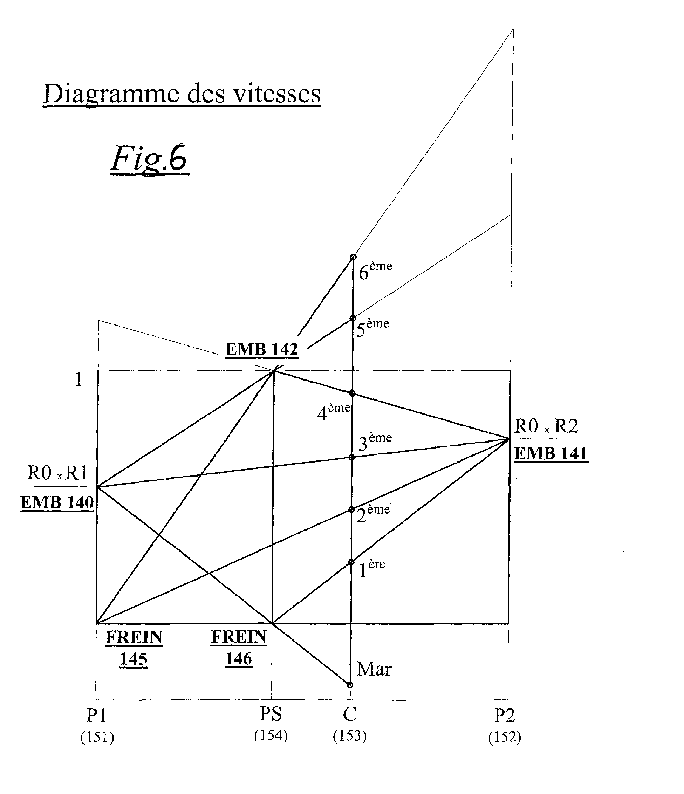

- la figure 6 représente un exemple de diagramme des vitesses correspondant à un train Ravigneaux pour les figures 5 et 6.

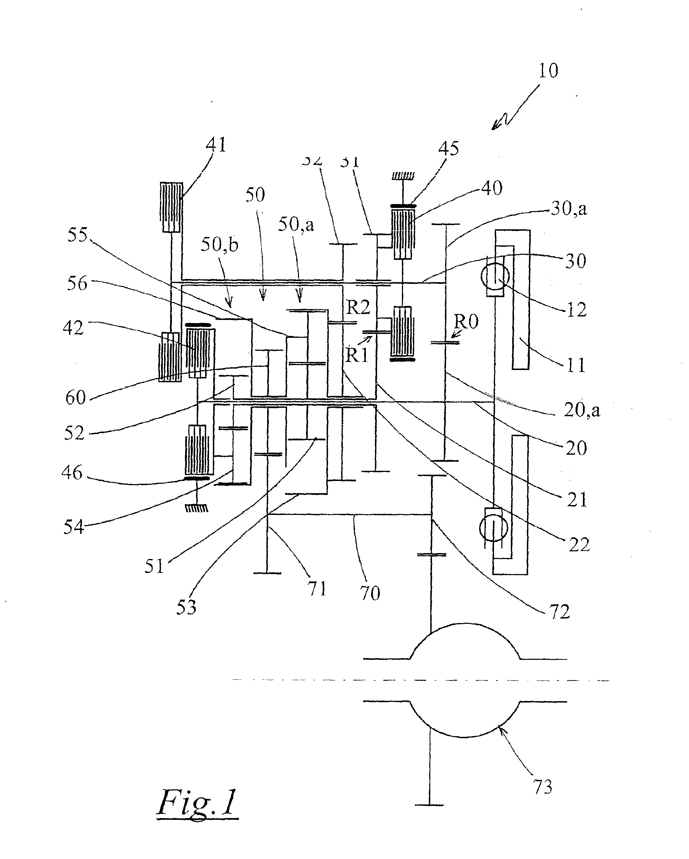

Dans la forme de réalisation schématique de la figure 1, la transmission 10 comporte un arbre d'entrée unique 20 et un arbre intermédiaire 30. L'arbre d'entrée est lié au volant moteur 11 par l'intermédiaire d'un dispositif 12 de filtrage des vibrations de torsion du moteur connu en soi. L'arbre d'entrée 20 comporte une unique denture fixe 20a constituant avec la denture fixe 30a liée à l'arbre intermédiaire 30 le rapport de transmission R0, choisi proche de un. L'arbre intermédiaire guide un premier pignon fou 31 avec lequel il peut être couplé par la fermeture du premier embrayage 40. Ce pignon peut également être immobilisé en rotation par le premier frein 45. L'arbre intermédiaire guide un deuxième pignon fou 32 avec lequel il peut être couplé par le second embrayage 41. Le pignon 31 forme avec le pignon 21, en rotation autour de l'arbre d'entrée et lié aux deux planétaires 51 et 52 du train planétaire double 50, le deuxième train d'engrenages de rapport R1.

Quand l'embrayage 40 est fermé, les planétaires 51 et 52 tournent dans le même sens que l'arbre d'entrée dans le rapport de réduction R0×R1. Le pignon 32 forme avec le pignon 22, en rotation autour de l'arbre d'entrée et lié à la couronne d'entée 53 du premier train planétaire 50a du train planétaire double 50, le troisième train d'engrenages de rapport R2.

Quand le deuxième embrayage 41 est fermé, la couronne 53 tourne dans le même sens que l'arbre d'entrée dans le rapport de réduction R0×R2. Conformément à une disposition préférée de l'invention, le rapport de réduction R2 est représenté sur la figure 1 plus important que le rapport de réduction R1. A l'extrémité de l'arbre d'entrée est placé un troisième embrayage 42 qui permet de solidariser l'arbre d'entrée 20 au porte-satellites 54 du deuxième train planétaire simple 50b du train planétaire double 50.

Le porte-satellites 54 peut également être immobilisé par rapport au carter par un second frein 46. Les autres éléments du train planétaire double 50 sont le porte-satellites 55 du premier train simple et la couronne 56 du deuxième train. Ces deux éléments sont liés et portent, intercalée entre eux, une denture 60 qui transmet le mouvement de sortie à un deuxième arbre intermédiaire 70 de réduction et d'inversion de mouvement. L'arbre intermédiaire 70 porte une denture d'entrée fixe 71 engrenant avec la denture 60, et une denture de sortie 72. Cette dernière transmet le mouvement au différentiel 73 qui répartit le couple aux deux roues.

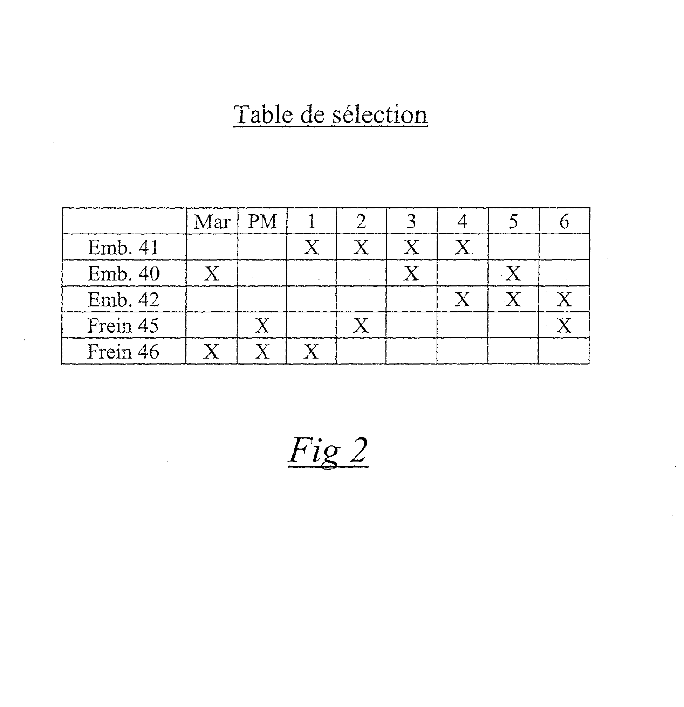

Le fonctionnement est donné par la table de sélection de la figure 2. Conformément à cette table, le fonctionnement est le suivant :
- en première, l'embrayage 41 est fermé, mettant en liaison la couronne 53 du premier train planétaire simple avec l'arbre d'entrée dans le rapport de réduction R0×R2. alors que le frein 46, serré, immobilise le porte satellite 54 du deuxième train planétaire simple,
- en deuxième, l'embrayage 41 reste fermé, alors que le frein 45, serré, immobilise les deux planétaires 51 et 52. Le passage de première en deuxième est obtenu en réalisant simultanément l'ouverture du frein 46 et le serrage du frein 45,
- en troisième, l'embrayage 41 est toujours fermé, alors que l'embrayage 40, met en liaison les deux planétaires 51 et 52 avec l'arbre d'entrée dans le rapport de réduction R0×R1. Le passage de deuxième en troisième est obtenu en réalisant simultanément l'ouverture du frein 45 et le serrage l'embrayage 40,
- en quatrième, l'embrayage 41 est encore fermé, alors que l'embrayage 42, met en liaison le porte-satellites 54 du deuxième train planétaire avec l'arbre d'entrée sans rapport de réduction ; le passage de troisième en quatrième est obtenu en réalisant simultanément l'ouverture de l'embrayage 40 et la fermeture de l'embrayage 42,
- en cinquième, l'embrayage 42 est maintenu fermé, alors que l'embrayage 40 est à nouveau fermé ; le passage de quatrième en cinquième est obtenu en réalisant simultanément l'ouverture de l'embrayage 41 et la fermeture de l'embrayage 40,
- en sixième, l'embrayage 42 est encore fermé, alors que le frein 45 est à nouveau serré ; le passage de cinquième en sixième est obtenu en réalisant simultanément l'ouverture de l'embrayage 40 et le serrage du frein 45,
- en marche arrière, l'embrayage 40 est fermé et le frein 46 est serré, et
- sur le point mort freiné on serre les deux freins 45 et 46 immobilisant le deuxième train planétaire simple 50b, la couronne 56 est bloquée et maintient le véhicule, alors que l'arbre d'entrée reste libre en rotation.

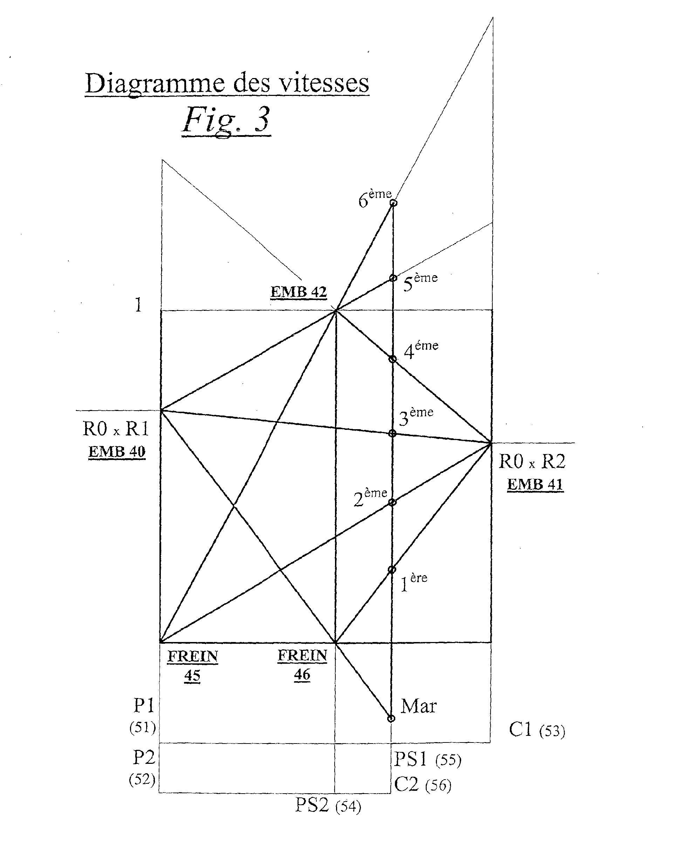

Pour illustrer l'obtention des rapports à partir de la représentation schématique de la figure 1 et de la table de sélection de la figure 2, on se reportera à la figure 3 où est présenté le diagramme des vitesses. On y trouve repérés en bas les différents éléments du train planétaire double. Sur les verticales des planétaires et de la couronne 53 sont positionnées les réductions dans les rapports respectifs R0×R1 et R0×R2. Enfin, les trois embrayages et les deux freins sont localisés.

Ce diagramme des vitesses est obtenu à partir d'un exemple concret. Les deux trains planétaires simples sont définis comme suit.

| | *Train planétaire 50a* | *Train planétaire 50b* |
|---|---|---|
| *Planétaire* | 29 dents | 20 dents |
| *Couronne* | 69 dents | 62 dents |
| *Satellites* | 20 dents | 21 dents |

A partir de cette configuration figée de trains planétaires, il est possible de faire varier l'ouverture de la boîte, et ce sur une plage suffisante pour couvrir les besoins pour des moteurs de type essence rapides et diesel lents à couple très élevé. Comme indiqué sur le tableau ci-dessous, l'ouverture varie de 5.5 à 7.0 pour des valeurs de réduction R1 de 0,73 à 0,62 et de réduction R2 de 0,65 à 0,515.

| | Ouverture **5.54** | Ouverture **6.00** | Ouverture **6.55** | Ouverture **6.99** |
|---|---|---|---|---|
| Rapport R0 | 1.0 | 1.0 | 1.0 | 1.0 |
| Rapport R1 Lié à planétaires 51 et 52 | 0.73 | 0.70 | 0.65 | 0.62 |
| Rapport R2 Lié à couronne 53 du train 50,a | 0.65 | 0.60 | 0.55 | 0.515 |

Les étagements et les ouvertures ou sauts entre deux rapports consécutifs obtenus sont remarquables et synthétisés dans le tableau ci-dessous.

| | Ouverture **5,54** | | Ouverture **6,00** | | Ouverture **6,55** | | Ouverture **6,99** | |
|---|---|---|---|---|---|---|---|---|
| Ratio MAR | 0,236 | | 0,226 | | 0,210 | | 0,200 | |
| Ecart 1^{ère}/Mar en % | | **-1,34** | | **2,49** | | **3,82** | | **5,75** |
| Ratio 1^{ère} | 0,239 | | 0,220 | | 0,202 | | 0,189 | |
| Saut 1^{ère}/2^{éme} | | **1,92** | | **1,92** | | **1,92** | | **1,92*** |
| Ratio 2^{éme} | 0,458 | | 0,442 | | 0,387 | | 0,363 | |
| Saut 2^{ème}/3^{ème} | | **1,47** | | **1,49** | | **1,50** | | **1,51** |
| Ratio 3^{ème} | 0,674 | | 0,630 | | 0,580 | | 0,546 | |
| Saut 3^{ème}/4^{ème} | | **1,29** | | **1,36** | | **1,44** | | **1,51** |
| Ratio 4^{ème} | 0,871 | | 0,853 | | 0,835 | | 0,822 | |
| Saut 4^{éme}/5^{ème} | | **1,25** | | **1,29** | | **1,33** | | **1,37** |
| Ratio 5^{ème} | 1,087 | | 1,097 | | 1,113 | | 1,123 | |
| Saut 5^{ème}/6^{ème} | | **1,22** | | **1,21** | | **1,19** | | **1,18** |
| Ratio 6^{ème} | 1,323 | | 1,323 | | 1,323 | | 1,323 | |

On remarquera que:
- le rapport R2 a été choisi plus petit que le rapport R1 car il donne les meilleurs résultats,
- le rapport des démultiplications 1^{ère}/MAR est toujours inférieur à 6% et est meilleur que celui obtenu et requis en boîte de vitesses manuelle,
- la surmultiplication de sixième est invariante, car elle dépend uniquement de la définition des trains planétaires ; ainsi, pour obtenir une autre valeur de surmultiplication, il faut choisir une autre combinaison des trains planétaires, et
   ■ l'augmentation de l'ouverture de la boîte se fait par les rapports inférieurs de plus en plus courts ; ce saut de première/deuxième reste constant et ne peut être modifié qu'en choisissant une autre combinaison de train planétaire double.

La capacité d'adaptation est donc très grande puisque, à chaque combinaison de trains planétaires, il est possible d'obtenir une diversité d'étagements.

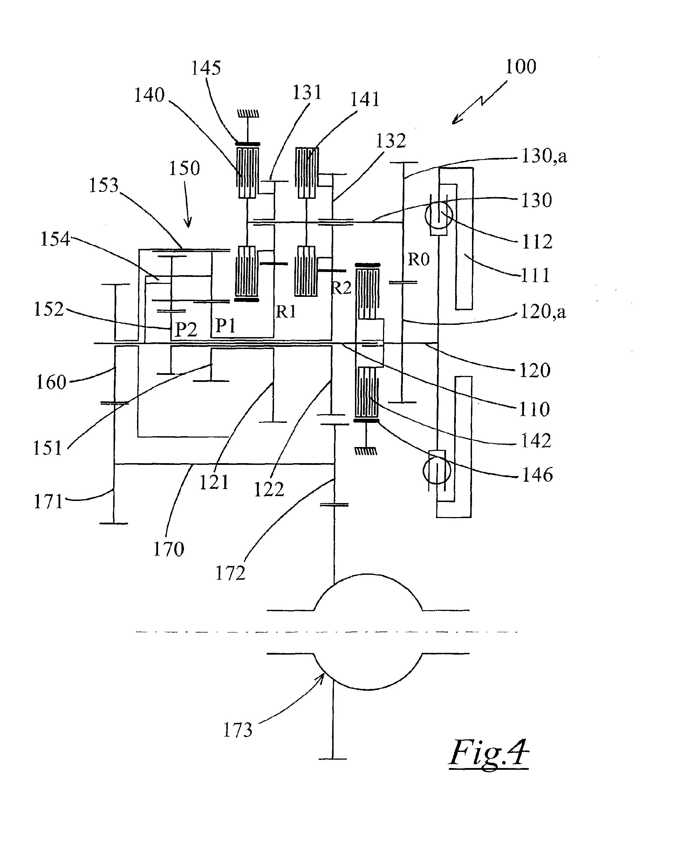

Dans la forme de réalisation schématique de la figure 4, relative à une boîte équipée d'un train Ravigneaux, la transmission 100 comporte un arbre d'entrée 120 et un arbre intermédiaire 130. L'arbre d'entrée 120 est lié au volant moteur 111 par l'intermédiaire d'un dispositif 112 de filtrage des vibrations de torsion du moteur connu en soi. L'arbre d'entrée 120 comporte une unique denture fixe 120a constituant avec la denture fixe 130a liée à l'arbre intermédiaire 130 le rapport de transmission R0, choisi proche de un. L'arbre intermédiaire guide un premier pignon fou 132 avec lequel il peut être couplé par la fermeture du premier embrayage 141. L'arbre intermédiaire guide un deuxième pignon fou 131 avec lequel il peut être couplé par le second embrayage 140. Ce pignon peut également être immobilisé en rotation par le premier frein 145. Le pignon 132 forme avec le pignon 122, en rotation autour de l'arbre porteur central 110, et lié au planétaire 152 (P2), le deuxième train d'engrenages de rapport R2.

Quand l'embrayage 141 est fermé, le planétaire 152 (P2) tourne dans le même sens que l'arbre d'entrée, dans le rapport de réduction R0×R2. Le pignon 131 forme avec le pignon 121, en rotation autour de l'arbre 110 et lié au planétaire 151 (PI), le troisième train d'engrenages de rapport R1.

Quand le deuxième embrayage 140 est fermé, le planétaire 151 (P1) tourne dans le même sens que l'arbre d'entrée dans le rapport de réduction R0×R1. Conformément à une disposition préférentielle de l'invention, le rapport de réduction R1, représenté sur la figure 4, est plus important que le rapport de réduction R2. A l'extrémité de l'arbre central 110 est placé un troisième embrayage 142 qui permet de solidariser l'arbre d'entrée 120 au porte-satellites 154. Le porte-satellites 154 peut également être immobilisé par rapport au carter par un second frein 146.

Le porte-satellites est solidaire d'une denture 160 qui transmet le mouvement de sortie à un deuxième arbre intermédiaire 170 de réduction et d'inversion de mouvement. L'arbre intermédiaire 170 porte une denture d'entrée fixe 171 engrenant avec la denture 160, et une denture de sortie 172. Cette dernière transmet le mouvement au différentiel 173 qui répartit le couple aux deux roues.

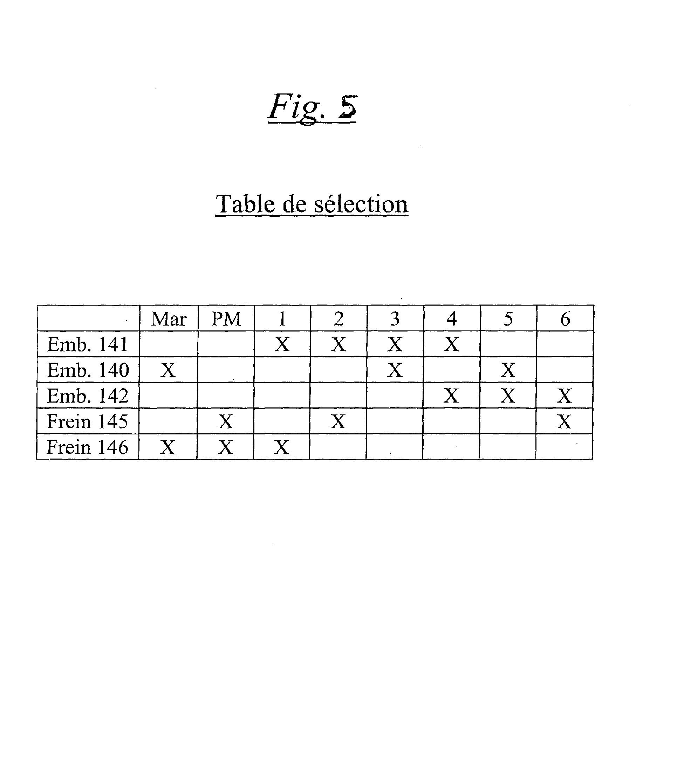

Le fonctionnement est donné par la table de sélection de la figure 5. Conformément à cette table, le fonctionnement est le suivant
- en première, l'embrayage 141 est fermé mettant en liaison le planétaire 152 (P2) avec l'arbre d'entrée dans le rapport de réduction R0×R2, alors que le frein 146, serré, immobilise le porte-satellites 154,
- en deuxième, l'embrayage 141 reste fermé, alors que le frein 145, serré, immobilise le planétaire 151 (P1); le passage de première en deuxième est obtenu en réalisant simultanément l'ouverture du frein 146 et le serrage du frein 145,
- en troisième, l'embrayage 141 est toujours fermé, alors que l'embrayage 140, met en liaison le planétaire 151 (P1) avec l'arbre d'entrée dans le rapport de réduction R0×R1 ; le passage de deuxième en troisième est obtenu en réalisant simultanément l'ouverture du frein 145 et le serrage de l'embrayage 140,
- en quatrième, l'embrayage 141 est encore fermé, alors que l'embrayage 142, met en liaison le porte satellite 154 avec l'arbre d'entrée 120 sans rapport de réduction ; le passage de troisième en quatrième est obtenu en réalisant simultanément l'ouverture de l'embrayage 140 et la fermeture de l'embrayage 142,
- en cinquième, l'embrayage 142 est maintenu fermé, alors que l'embrayage 140 est à nouveau fermé ; le passage de quatrième en cinquième est obtenu en réalisant simultanément l'ouverture de l'embrayage 141 et la fermeture de l'embrayage 140,
- en sixième, l'embrayage 142 est encore fermé, alors que le frein 145, serré, immobilise à nouveau le planétaire 151 (P1); le passage cinquième en sixième est obtenu en réalisant simultanément l'ouverture de l'embrayage 140 et le serrage du frein 145,
- en marche arrière, l'embrayage 140 met en liaison le planétaire 151 avec l'arbre d'entrée dans le rapport de réduction R0×R1, alors que le frein 146, serré, immobilise le porte-satellites 154,
- sur le point mort freiné, on serre les deux freins 145 et 146 immobilisant le porte-satellites 154 et le planétaire 151 (P1) ;la couronne 153 est bloquée, et maintient le véhicule alors que l'arbre d'entrée reste libre en rotation.

Pour illustrer l'obtention des rapports à partir de la représentation schématique de la figure 4 et de la table de sélection de la figure 5, on se reportera à la figure 4 où est présenté le diagramme des vitesses. On y trouve repérés, en bas, les différents éléments du train Ravigneaux, les planétaires 151 (P1) ,152 (P2) la couronne 153 et le porte-satellites 154.

Sur les verticales aux planétaires 151 et 152, sont positionnées les réductions dans les rapports respectifs R0×R1 et R0×R2. Les trois embrayages et les deux freins sont également localisés.

Ce diagramme des vitesses est obtenu à partir d'un exemple concret. Le train Ravigneaux est défini comme suit.

| | *Train Ravigneaux 1* |
|---|---|
| *Couronne* | 69 dents |
| *Planétaire 1* | 31 dents |
| *planétaire 2* | 23 dents |

A partir de cette configuration, il est possible de faire varier l'ouverture de la boîte , et ce sur une plage suffisante pour couvrir les besoins pour des moteurs de type essence rapides et diesel lents à couple très élevé. Comme indiqué sur le tableau ci-dessous, l'ouverture varie de 5,0 à 6,49 pour des valeurs de réduction R1 de 0,605 à 0,52 et de réduction R2 de 0,87 à 0,67.

| | Ouverture **5.00** | Ouverture **5.50** | Ouverture **5.96** | Ouverture **6.49** |
|---|---|---|---|---|
| Rapport R0 | 1.0 | 1.0 | 1.0 | 1.0 |
| Rapport R1 Lié à planétaires P1 | 0.605 | 0.58 | 0.54 | 0.52 |
| Rapport R2 Lié à Planétaire P2 | 0.87 | 0.79 | 0.73 | 0.67 |

Les étagements et les ouvertures ou sauts entre deux rapports consécutifs obtenus sont remarquables et synthétisés dans le tableau ci-dessous.

| | Ouverture **5.00** | | Ouverture **5.50** | | Ouverture **5.96** | | Ouverture **6.49** | |
|---|---|---|---|---|---|---|---|---|
| Ratio MAR | 0,272 | | 0,261 | | 0,243 | | 0,234 | |
| en % Ecart 1ère/Mar en % | | **-6,27** | | **-1,05** | | **3,82** | | **4.61** |
| Ratio 1ère | 0,290 | | 0,263 | | 0,243 | | 0,223 | |
| Saut 1ère/2ème | | **1,85** | | **1,85** | | **1,85** | | **1.85** |
| Ratio 2ème | 0,537 | | 0,488 | | 0,451 | | 0,414 | |
| Saut 2ème/3éme | | **1,43** | | **1,46** | | **1,46** | | **1,48** |
| Ratio 3^{ème} | 0,769 | | 0,710 | | 0,657 | | 0,613 | |
| Saut 3^{ème}/4^{ème} | | **1, 25** | | **1,31** | | **1,38** | | **1.45** |
| Ratio 4^{éme} | 0,957 | | 0,930 | | 0,910 | | 0,890 | |
| Saut 4^{ème}/5^{ème} | | **1,23** | | **1,28** | | **1,33** | | **1,37** |
| Ratio 5^{ème} | 1,177 | | 1,189 | | 1,207 | | 1,216 | |
| Saut 5^{ème}/6^{ème} | | **1,23** | | **1,22** | | **1,20** | | **1,19** |
| Ratio 6^{ème} | 1,449 | | 1,449 | | 1,449 | | 1,449 | |

On remarquera que :
- le rapport des démultiplications 1^{ère}/MAR est toujours faible et meilleur que celui obtenu et requis en boîte de vitesses manuelle;
- la surmultiplication de sixième est la même quelle que soit l'ouverture car elle dépend uniquement de la définition du train. Pour obtenir une autre valeur de surmultiplication, il faut choisir une autre combinaison du train.

L'augmentation de l'ouverture de la boîte se fait donc par les rapports inférieurs de plus en plus courts. Le saut de première/deuxième reste constant et ne peut être modifié qu'en choisissant une autre combinaison du train.

La capacité d'adaptation est grande puisque à chaque choix de combinaisons de trains Ravigneaux, il est possible d'avoir une diversité d'étagements.

## Revendications

1. Transmission automatique (10) à six vitesses **caractérisée en ce qu'**elle comporte trois trains d'engrenages entre d'une part un arbre d'entrée (20) constituant un premier chemin de puissance et supportant un train planétaire double (50) et un pignon de sortie (60), et d'autre part d'un arbre intermédiaire (30) parallèle à l'arbre d'entrée constituant un deuxième chemin de puissance.

2. Transmission automatique (100) à six vitesses **caractérisée en ce qu'**elle comporte trois trains d'engrenages entre d'une part un arbre d'entrée (120) et un second arbre (110) dans l'alignement de l'arbre d'entrée, constituant un premier chemin de puissance supportant un train Ravigneaux (150) et un pignon de sortie (160), et d'autre part un arbre intermédiaire (130) parallèle à l'arbre d'entrée constituant un deuxième chemin de puissance.

3. Transmission automatique selon la revendication 1, ou 2 **caractérisée en ce que** le premier train d'engrenages, composé de deux pignons fixes (20a, 120a) et (30a, 130a) portés respectivement par l'arbre d'entrée (20, 120) et par l'arbre intermédiaire (30, 130), a un rapport de transmission R0 proche de un.

4. Transmission automatique selon le revendication 1, 2 ou 3, **caractérisée en ce que** le deuxième train d'engrenages est composé d'une part d'un pignon fou (31) porté par l'arbre intermédiaire, pouvant être couplé avec ce dernier par un premier embrayage (40) ou immobilisé par rapport au carter par un premier frein (45), et d'autre part d'un pignon (21) fixe par rapport aux deux planétaires (51) et (52) d'un train planétaire double (50), coaxial à l'arbre d'entré (20), et **en ce que** son rapport de transmission R1 est tel que le produit R1xR0 soit un rapport de réduction.

5. Transmission automatique selon le revendication 2 ou 3, **caractérisée en ce que** le deuxième train d'engrenages est composé d'un pignon fou (132) porté par l'arbre intermédiaire, pouvant être couplé avec ce dernier par un premier embrayage (141) et un pignon (122) fixe par rapport au planétaire P2 (152) et **en ce que** son rapport de transmission R2 est tel que le produit R2×R0 soit un rapport de réduction.

6. Transmission automatique selon la revendication 1, ou 4, **caractérisée en ce que** le troisième train d'engrenages est composé d'une part d'un pignon fou (32) porté par l'arbre intermédiaire (30) pouvant être couplé avec ce dernier par un second embrayage (41), et d'autre part d'un pignon (22) fixe par rapport à la couronne (53) du premier train planétaire simple (50a) du double train planétaire (50), coaxial à l'arbre d'entrée (20) et **en ce que** son rapport R2 est tel que le produit R2×R0 soit un rapport de réduction.

7. Transmission automatique selon la revendication 2 ou 5, **caractérisée en ce que** le troisième train d'engrenages est composé d'un pignon fou (131) porté par l'arbre intermédiaire (130), pouvant être couplé avec ce dernier par un second embrayage (140) ou immobilisé par rapport au carter par un premier frein (145), et un pignon (121) fixe par rapport au planétaire P1 (151), et **en ce que** son rapport de transmission R1 est tel que le produit R1×R0 soit un rapport de réduction.

8. Transmission automatique (10) selon l'une des revendications 1, 3, 4, 6, **caractérisée en ce que** le train planétaire double (50) présente :
- deux planétaires (51) et (52) liés entre eux et solidaires du pignon (21) du deuxième train d'engrenages (31,21) de rapport R1,
- une première couronne (53) du premier train planétaire (50a) solidaire du pignon (22) du troisième train d'engrenages (32,22) et de rapport R2,
- un premier porte-satellites (55) du premier train planétaire (50a) solidaire de la couronne (56) du deuxième train simple (50b) et du pignon (60) de sortie du mouvement vers un second arbre intermédiaire (70) d'inversion de mouvement et de transfert vers un différentiel (73), et
- un second porte-satellites (54) du deuxième train planétaire simple (50b) pouvant être solidarisé à l'arbre d'entrée (20) par un troisième embrayage (42) ou immobilisé par rapport au carter par un deuxième frein (46).

9. Transmission automatique (10) selon l'une des revendications 1, 3, 4, 6 ou 8, **caractérisée en ce que** le rapport de réduction R2×R0, obtenu par la combinaison des premier et troisième trains d'engrenages, est différent ou égal au rapport de réduction R1×R0 obtenu par la combinaison des premier et deuxième trains d'engrenages.

10. Transmission automatique (100) selon l'une des revendications 2, 3, 5 ou 7, **caractérisée en ce que** le train Ravigneaux porté par l'arbre (110) a :
- une couronne (153) liée à un pignon de sortie de puissance (160) vers un arbre (170) de transfert et d'inversion de mouvement vers un différentiel (173), et
- un porte-satellites (154) lié à l'arbre (110) pouvant être couplé à l'arbre d'entrée par l'intermédiaire d'un troisième embrayage (142) ou immobilisé par rapport au carter par un second frein (146).

11. Transmission automatique (100) selon l'une des revendications 2, 3, 5, 7 ou 10, **caractérisée en ce que** le rapport de réduction R1×R0, obtenu par la combinaison des premier et troisième trains d'engrenages est différent du rapport de réduction R2×R0 obtenu par la combinaison des premier et deuxième trains d'engrenages.

12. Transmission automatique (10) selon l'une des revendications précédentes, **caractérisée en ce qu'**elle comporte six rapports de marche avant, un rapport de marche arrière et un point mort freiné.

13. transmission automatique selon la revendication 12, **caractérisée en ce que** ;
- le premier rapport de marche avant est obtenu en fermant l'embrayage (41) qui solidarise la couronne (53) à l'arbre d'entrée (20) dans le rapport de réduction R2×R0, et en bloquant le porte-satellites (42) par le frein (46),
- le deuxième rapport de marche avant est obtenu en fermant l'embrayage (41) et en immobilisant les planétaires (51,52) en serrant le frein (45),
- le troisième rapport de marche avant est obtenu en fermant l'embrayage (41) et en fermant l'embrayage (40) si solidarise les planétaires (51,52) avec l'arbre d'entrée (20) dans le rapport de réduction R0×R1,
- le quatrième rapport de marche avant est obtenu en fermant l'embrayage (41) et en solidarisant le porte satellite (54) à l'arbre d'entrée en fermant l'embrayage (42),
- le cinquième rapport de marche avant est obtenu en fermant les embrayage (42) et (40),
- le sixième rapport de marche avant est obtenu en fermant l'embrayage (41) et en serrant le frein (45),
- le rapport de marche arrière est obtenu en fermant l'embrayage (40) et en serrant le frein (46), et
- le point mort freiné est obtenu en serrant les deux freins (45,46).

14. Transmission automatique selon la revendication 12, **caractérisée en ce que** :
- le premier rapport de marche avant est obtenu en fermant l'embrayage (141) qui solidarise le planétaire P2 (152) avec l'arbre d'entrée dans le rapport de réduction R0×R2 et serrant le frein (146) du porte satellite (154),
- le deuxième rapport de marche avant est obtenu en fermant l'embrayage (141) et en serrant le frein (145) immobilisant le planétaire P1 (151),
- le troisième rapport de marche avant est obtenu en fermant l'embrayage (141) et en fermant l'embrayage (140) qui solidarise le planétaire P1 (151) avec l'arbre d'entrée dans le rapport de réduction R0×R1,
- le quatrième rapport de marche avant est obtenu en fermant l'embrayage (141) et en fermant l'embrayage (142) qui solidarise le porte satellite (154) à l'arbre d'entrée,
- le cinquième rapport de marche avant est obtenu en fermant l'embrayage (142) et en fermant l'embrayage (140),
- le sixième rapport de marche avant est obtenu en fermant l'embrayage (142) et en serrant le frein (145),
- le rapport de marche arrière est obtenu en fermant l'embrayage (140) et en serrant le frein (146), et
- le point mort freiné est obtenu en serrant les deux freins (145,146).

15. Transmission automatique (10) selon l'une des revendications précédentes, **caractérisée en ce que** la liaison permanente entre l'arbre d'entrée (20, 120) et un volant moteur (111) est réalisée par un filtre (112) et un embrayage (141) dimensionné pour assurer la fonction d'embrayage de démarrage du véhicule.
